# EUROPEAN PATENT APPLICATION

(11) **EP 2 228 721 A1**
(43) Date of publication of application: **15.09.2010**
(21) Application number: 10155852.6
(22) Date of filing: 08.03.2010
(51) Int. Cl.: G06F 9/50

(54) **System and method for unified cloud management**

(30) Priority: 13.03.2009 US 160022 P; 05.11.2009 US 612818
(71) Applicant: Novell, Inc., Provo, Utah 84606-6169 (US)
(72) Inventor: Carter, Stephen R, Spanish Fork, UT 84660 (US); Olds, Dale Robert, Draper, UT 84020 (US); Rosevear, Jean-Paul Augustus, Mount Albert Ontario L0G 1M0 (CA)
(74) Representative: Hanna, Peter William Derek

(57) **Abstract**

Method and system for managing workloads in a cloud computing environment comprising cloud services providers (202) is described. In one embodiment, the method comprises, for each of the cloud services providers, monitoring (200) a situation of the cloud services provider to obtain situation information for the cloud services provider and evaluating (204) the obtained situation information and then deploying (240) a workload to a selected one of the cloud services providers based at least in part on results of the evaluating.

## Description

### BACKGROUND

Cloud computing is a type of computing in which dynamically scalable and typically virtualized resources are provided as services via the Internet. As a result, users need not, and typically do not, possess knowledge of, expertise in, or control over the technology and/ or infrastructure implemented in the cloud. Cloud computing generally incorporates infrastructure as a service ("IaaS"), platform as a service ("PaaS"), and/or software as a service ("SaaS"). In a typical embodiment, cloud computing services provide common applications online, which applications are accessed using a web browser and the software and data for which are stored on servers comprising the cloud.
Cloud computing customers typically do not own or possess the physical infrastructure that hosts their software platform; rather, the infrastructure is leased in some manner from a third-party provider. Cloud computing customers can avoid capital expenditures by paying a provider only for what they use on a utility, or resources consumed, basis or a subscription, or time-based, basis, for example. Sharing computing power and/or storage capacity among multiple lessees has many advantages, including improved utilization rates and an increase in overall computer usage.

The Internet is rapidly spawning a host of "cloud providers" to provide infrastructure, platforms, and software as services. Cloud providers such as Amazon.com (AWS), GoGrid, Eucalyptus, and others are providing a host of new opportunities on the Internet, but have not yet joined forces to provide a common management or execution platform.

### SUMMARY

The present invention provides a method and system for managing workloads in a cloud computing environment comprising a plurality of cloud services providers, in accordance with claims which follow. The method comprises, for each of the cloud services providers, monitoring a situation of the cloud services provider to obtain situation information for the cloud services provider and evaluating the obtained situation information and then deploying a workload to a selected one of the cloud services providers based at least in part on results of the evaluating.

### BRIEF DESCRIPTION OF THE DRAWINGS

Fig. 1 illustrates an exemplary IaaS cloud structure such as may be implemented in one embodiment.

Fig. 2 is a flow diagram of one embodiment of a process for implementing unified cloud management.

### DETAILED DESCRIPTION

To better illustrate the advantages and features of the embodiments, a particular description of several embodiments will be provided with reference to the attached drawings. These drawings, and other embodiments described herein, only illustrate selected aspects of the embodiments and are not intended to limit the scope thereof. Further, despite reference to specific features illustrated in the example embodiments, it will nevertheless be understood that these features are not essential to all embodiments and no limitation of the scope thereof is thereby intended. Any alterations and further modifications in the described embodiments, and any further applications of the principles of the embodiments as described herein are contemplated as would normally occur to one skilled in the art. Furthermore, some items are shown in a simplified form, and inherently include components that are well known in the art. Further still, some items are illustrated as being in direct connection for the sake of simplicity and clarity. Despite the apparent direct connection, it is understood that such illustration does not preclude the existence of intermediate components and/or protocols not otherwise illustrated.

The embodiments described herein provide a mechanism for monitoring and managing enterprise cloud assets across multiple clouds maintained by one or more cloud providers. One or more embodiments described herein provide a method and mechanism to manage reputation, past performance, statistics, and preferences concerning individual cloud providers. Additionally, one or more such embodiments provide a method and mechanism for enabling selection of a cloud provider to be based on past performance and reputation.

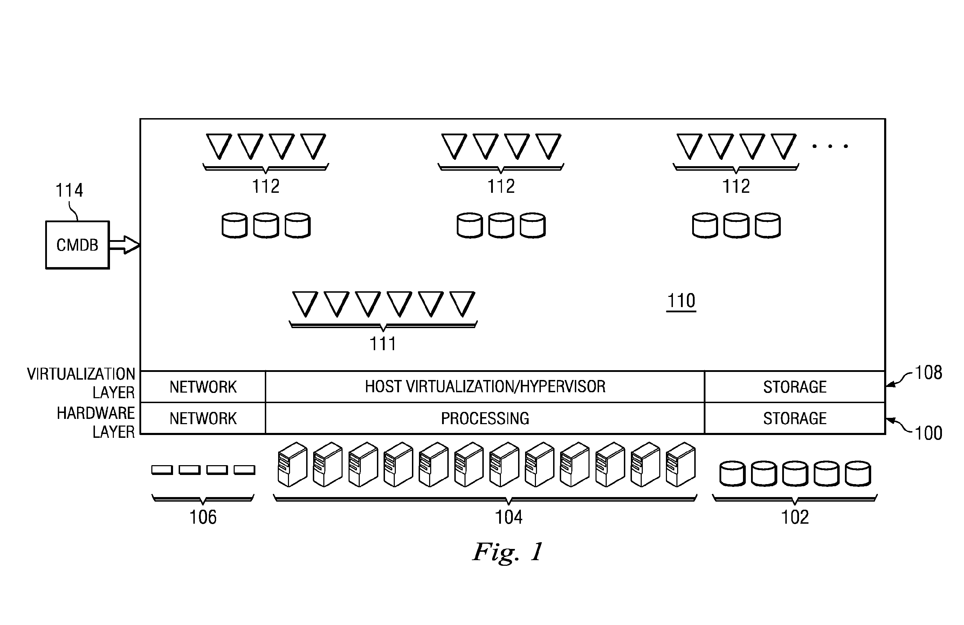

Fig. 1 illustrates an exemplary IaaS cloud structure. As shown in Fig. 1, the cloud structure includes a hardware layer 100 comprising storage assets 102, processing assets 104, and network assets 106. To facilitate usefulness of the cloud to a variety of enterprises, workloads are sponsored in the cloud as virtual machines possibly accessing virtualized storage and/or virtualized networks. This is accomplished via a virtualization layer 108. Thus, the hardware layer 100 is insulated from the actual workloads to be sponsored in the cloud at a layer 110 by the virtualization layer 108 hardware, storage, and networking so that the operating system selected by the enterprise can be sponsored on whatever hardware the cloud provider makes available. Having established the hardware and virtualization layers 100, 108, the assets 102, 104, and 106 are available in a standardized way to workloads hosted in the workload layer 110, which is the layer the customer typically views as the "cloud". It will be recognized that some of the workloads sponsored in the cloud, specifically, workloads 111, are workloads that are germane to the operation of the cloud and may consist of monitoring processes for enabling the cloud provider to monitor the health of the cloud, management processes to enable the cloud provider to ensure that service-level agreements are enforced, and so on.

Enterprises using the cloud are represented by virtualization processes and storage shown as workloads 112. These processes are typically started by an enterprise via a cloud portal or API utilized by administrative personnel or processes running at the enterprise or in the cloud. A typical cloud provider may be using standard ITIL practices and may utilize a configuration management database ("CMDB") 114, which affects the entire cloud infrastructure and which describes the practice and policies used for instantiating virtualized workloads and storage.

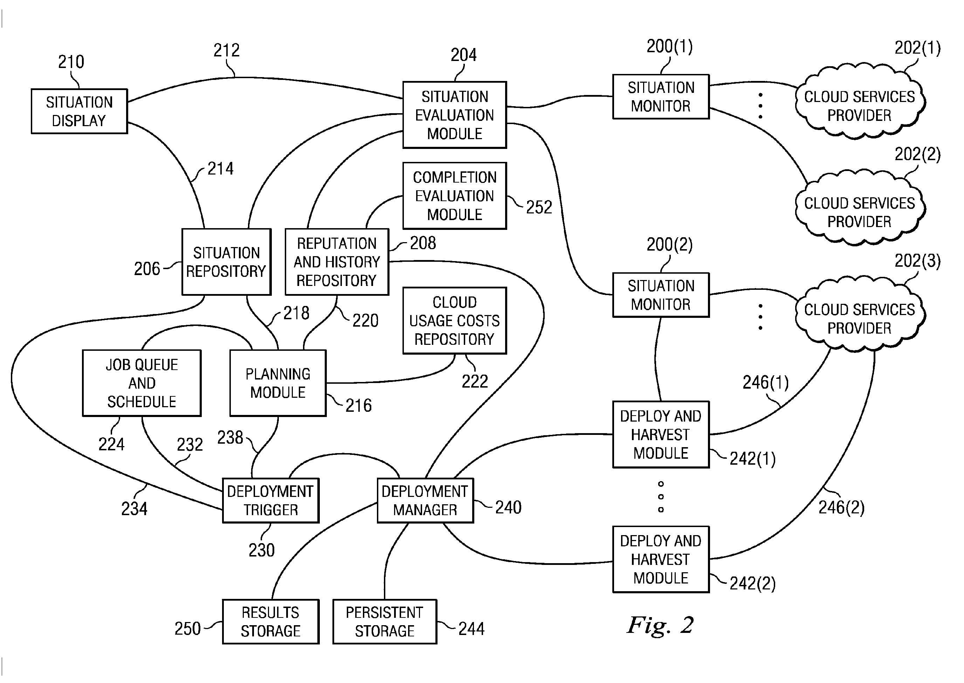

Fig. 2 is a flow diagram of one embodiment of a process for implementing unified cloud management. As shown in Fig. 2, each of one or more situation monitors, represented in Fig. 2 by two situation monitors 200(1)-200(2), provides specific mechanisms and methods to monitor one or more cloud services providers 202(1)-202(3). Each of the situation monitors 200(1)-200(2) is responsible for implementing the specific mechanisms needed to monitor the reliability, capability, and performance (hereinafter collectively "situation") of given ones of the cloud services providers 202(1)-202(3) based on the infrastructure and API set made available by the cloud services provider. Results of such monitoring by the situation monitors 200(1)-200(2) comprise "situation results." The situation results are provided to and evaluated by a situation evaluation module 204, wherein the composite information concerning the situation of each cloud services provider 202(1)-202(3) as obtained by one of the situation monitors 200(1)-200(2) is correlated and summarized and placed in a situation information repository 206.

In one embodiment, the situation evaluation module 204 also accesses a reputation and history repository 208, in which correlated and summarized historical reputation and situation information is stored. A situation display 210 is capable of displaying real-time situation information generated by the situation evaluation module 204 and provided to the display via a path 212. In the illustrated embodiment, information from the situation evaluation module 204 may be aggregated with information received from the situation information repository 206 via a path 214 such that some combination of real-time and summarized/aggregated situation information regarding the cloud services providers 202(1)-202(3) or workloads being run on the cloud services providers may be presented on the situation display 210.

A planning module 216 accesses the information stored in the situation information repository 206 and the reputation and history repository 208, via paths 218 and 220, respectively, as well as cloud cost usage information from a cloud cost usage repository 222, and uses the information to develop a job queue and schedule 224, wherein workloads are optimally scheduled based on client usage costs from the repository 222, reputation and history information from the repository 208, and historical and real-time data from the repository 206. A deployment trigger module 230 accesses information from the job queue and schedule 224 via a path 232 and ensures that workloads are sent to the cloud services provider designated in the job queue and schedule at the time designated therein.

In the illustrated embodiment, the deployment trigger module 230 evaluates a current situation in the repository 206 via a path 234 to ensure that any job deployment restrictions declared in the job queue and schedule 224 are enforced. The planning module 216 may send an immediate request to the deployment trigger module 230 via a path 238 in the case of an immediate workload schedule or as an alert that a high-priority or other type of prioritized workload has been added to the job queue and schedule 224 of which the deployment trigger module 230 will need to be aware before its next scheduled evaluation of the job queue and schedule. A deployment manager 240 will then receive an event from the deployment trigger module 230 containing the information necessary to deploy the workload to the appropriate one of the cloud services providers 202(1)-202(3) via a one or more deploy and harvest modules 242(1)-242(2). Such deployment may require references to persistent storage 244 that should be associated with the workload. If so, the information is obtained via the persistent storage 244 and communicated to the deploy and harvest module(s) 242(1)-242(2) so that the deployment via the cloud services providers 202(1)-202(3) have that information.

The deploy and harvest modules 242(1)-242(2) may also communicate with one of the situation monitors 200(1)-200(2) to alert the situation monitor to the fact that the new workloads are being deployed in one of the cloud services providers 202(1)-202(3). It will be noted that while only one of the situation monitors (situation monitor 200(1)) is shown as interacting with the deployment and harvest modules 242(1)-242(2), they are also communicating with the remaining situation monitors (in this case, the situation monitor 200(2)). The appropriate one of the cloud services providers 202(1)-202(3), e.g., the cloud services provider 202(3), receives the workload deployment via one of paths 246(1)-246(2) and deploys it appropriately.

In the illustrated embodiment, as the workload is being processed by the cloud services provider 202(3), the deploy and harvest modules 246(1)-246(2) may also harvest runtime and/ or workload information, which will be placed in either results storage 250 or persistent storage 244 according to the nature of the information. For example, as a workload terminates, the persistent storage designators thereof may be harvested and stored in persistent storage 244 for later use. In one embodiment, results storage 250 contains the results of the workload deployment and execution in the cloud services provider 202(3) and deployment manager 240 uses that information to update reputation and history repository 208. The deployment manager 240 may also be used interactively so that satisfaction indicators concerning the responsiveness of the cloud services provider 202(3)and the timeliness of the workload processing can be noted in reputation and history repository 208. In one embodiment, a completion evaluation module 252 summarizes, weights, and/or normalizes the reputation and history information from the repository 208 as desired.

In one embodiment, cloud usage costs from the repository 222 may be updated from the cloud services providers 202(1)-202(3) directly or entered at the enterprise. Cloud usage costs may be influenced by the amount of utilization of the enterprise agrees with the cloud services providers 202(1)-202(3) to direct towards the cloud services providers during a given time period.

It will be recognized that various ones of the elements and/ or modules described herein may be implemented using one or more general purpose computers or portions thereof executing software applications designed to perform the functions described or using one or more special purpose computers or portions thereof configured to perform the functions described. The software applications may comprise computer-executable instructions stored on computer-readable media. Additionally, the repositories described herein may be implemented using databases or other appropriate storage media.

It will be recognized that various ones of the elements and/or modules described herein may be implemented using one or more general purpose computers or portions thereof executing software applications designed to perform the functions described or using one or more special purpose computers or portions thereof configured to perform the functions described. The software applications may comprise computer-executable instructions stored on computer-readable media. Additionally, repositories described herein may be implemented using databases or other appropriate storage media.

While the preceding description shows and describes one or more embodiments, it will be understood by those skilled in the art that various changes in form and detail may be made therein without departing from the scope of the present disclosure. For example, various steps of the described methods may be executed in a different order or executed sequentially, combined, further divided, replaced with alternate steps, or removed entirely. In addition, various functions illustrated in the methods or described elsewhere in the disclosure may be combined to provide additional and/ or alternate functions.

## Claims

1. A method for managing workloads (111,112) in a cloud computing environment comprising a plurality of cloud services providers (202), the method comprising:
for each of the cloud services providers (202):
monitoring a situation of the cloud services provider to obtain situation information for the cloud services provider; and
evaluating the obtained situation information; and
deploying a workload to a selected one of the cloud services providers based at least in part on results of the evaluating.

2. The method of claim 1 further comprising displaying the obtained situation information.

3. The method of claim 1 further comprising:
correlating and summarizing the obtained situation information; and
storing the correlated and summarized information in a situation repository (206).

4. The method of claim 3 further comprising:
accessing from a reputation and history repository (208) at least one of reputation data and history data regarding the cloud services providers (202);
further correlating and summarizing the obtained situation information for the cloud services providers based at least in part on the accessed at least one of reputation data and history data; and
storing the further correlated and summarized information in the situation repository (206).

5. The method of claim 4 further comprising:
aggregating real-time situation information obtained from the cloud services providers (202) with the stored further correlated and summarized situation information; and
displaying the aggregated real-time situation information along with the stored further correlated and summarized situation information.

6. The method of claim 3 wherein the deploying further comprises:
accessing the correlated and summarized information from the situation repository (206);
accessing from a reputation and history repository (208) at least one of reputation data and history data regarding the cloud services providers (202);
accessing cloud cost usage from a cost usage repository (222);
evaluating the accessed correlated and summarized situation information, the accessed at least one of reputation and history data, and the accessed cloud cost usage and, based on the evaluating:
selecting one or more cloud services providers for supporting each of the workloads; and
scheduling each of the workloads in a queue in accordance with the selected cloud services provider.

7. The method of claim 6 wherein the deploying further comprises deploying each of the workloads to the selected one or more cloud services provider (202) at a scheduled time.

8. The method of claim 1, further comprising, subsequent to the deploying, harvesting results of the workloads.

9. A system for managing workloads in a cloud computing environment comprising cloud services providers (200), the system comprising:
at least one situation monitor (202) for monitoring the cloud services providers and obtaining situation information therefrom;
a situation evaluation module (204) for receiving the situation information from the at least one situation monitor and evaluating the situation information; and
a planning module (216) for selecting one or more cloud services providers for supporting each of the workloads based at least in part on the evaluated situation information.

10. The system of claim 9 further comprising:
a situation repository (206) for storing the situation information; and
a reputation and history repository (208) for storing at least one of reputation and history data regarding the cloud services providers;
wherein the situation evaluation module (204) further correlates and summarizes the obtained situation information based in part on at least one of reputation and history regarding accessed from the reputation and history repository and stores the further correlated and summarized situation information in the situation repository (206).

11. The system of claim 10 further comprising a display (210) for displaying situation information obtained from the situation evaluation module (204) and the situation repository (206).

12. The system of claim 11 further comprising a cloud usage cost repository (222) for storing cloud usage cost data regarding the cloud services providers (202),
wherein the planning module (216) further:
accesses the correlated and summarized situation information;
accesses at least one of reputation and history data from the reputation and history repository (208);
accesses cloud cost usage data;
selects one or more cloud services providers (202) for supporting each of the workloads based at least in part on the accessed situation information and data; and
schedules each of the workloads for deployment to the selected one or more cloud services providers;
the system further comprising a deployment and harvest module (242) for deploying the workloads as scheduled and harvesting workload data subsequent to the deployment.

13. The system of claim 10 further comprising a completion evaluation module (252) for normalizing at least one of reputation and history data and storing the normalized data to the reputation and history repository (208).
